(19) Europäisches Patentamt / European Patent Office / Office européen des brevets

(11) **EP 4 481 338 A1**

(12) **EUROPEAN PATENT APPLICATION**
published in accordance with Art. 153(4) EPC

(43) Date of publication:
**25.12.2024 Bulletin 2024/52**

(21) Application number: **23791565.7**

(22) Date of filing: **09.03.2023**

(51) International Patent Classification (IPC):
***G01F 23/263*** (2022.01)    ***G01F 23/24*** (2006.01)

(52) Cooperative Patent Classification (CPC):
**G01F 23/24; G01F 23/263**

(86) International application number:
**PCT/JP2023/009130**

(87) International publication number:
**WO 2023/203912 (26.10.2023 Gazette 2023/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.04.2022 JP 2022068240**

(71) Applicant: **Japan Aviation Electronics Industry, Limited**
**Tokyo 150-0043 (JP)**

(72) Inventors:
- **ICHIKAWA, Shintaro**
  **Tokyo 150-0043 (JP)**
- **YAMANE, Kohei**
  **Tokyo 150-0043 (JP)**

(74) Representative: **MERH-IP Matias Erny Reichl Hoffmann**
**Patentanwälte PartG mbB**
**Paul-Heyse-Straße 29**
**80336 München (DE)**

(54) **A SENSOR UNIT 70 INCLUDES N COLUMNS OF SENSORS IN WHICH ELECTRODE PAIRS 31 ARE ARRANGED**

(57)    A sensor unit 70 includes n columns of sensors in which electrode pairs 31 are arranged, when a range in a liquid level detection direction is referred to as a region and a range obtained by dividing the region is referred to as a division region, the electrode pairs 31 are positioned at boundaries of regions and at boundaries of division regions, a sensor in a first column has $a_1$ division regions when a measurement range of a liquid level gauge is considered to be a region, a second column has $a_1$ regions corresponding to the division regions in the first column and each of the regions has $a_2$ division regions, an n-th column has regions whose number is obtained by multiplying numbers from $a_1$ to $a_{n-1}$ and which correspond to division regions in an n-1-th column and each of the regions has $a_n$ division regions, each electrode pair 31 in the first column is connected to a discrimination means 90, as for the electrode pairs 31 in the second and subsequent columns, the electrode pairs 31 located at boundaries of the regions are connected with each other and are connected to the discrimination means 90 and the electrode pairs 31 located at the same boundaries of the division regions in respective regions are connected with each other and are connected to the discrimination means 90, and the discrimination means 90 discriminates the magnitude of a detection value of each sensor for each sensor and determines a liquid level based on the discrimination.

EP 4 481 338 A1

# FIG. 4

**Description**

[TECHNICAL FIELD]

The present disclosure relates to a sensor for locating a position of an interface between two types of substances (hereinafter, referred to as an interface sensor), and a liquid level gauge including the interface sensor.

[BACKGROUND ART]

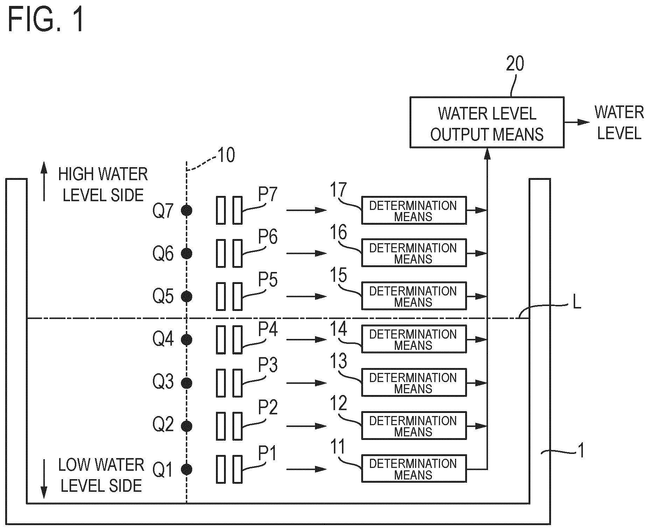

FIG. 1 is a duplication of FIG. 1 of Patent Literature 1 and shows a principle diagram of a water level sensor of prior art. The water level sensor of the prior art measures a water level from a predetermined reference position in a tank 1 (for example, the bottom surface of the tank) to a liquid level L. A reference line 10 is a virtual line, and Z points $Q_z$ (z=1, 2, ..., Z) for observation are set in advance on the reference line 10. In the example illustrated in FIG. 1, Z=7, and seven observation points $Q_1$ to $Q_7$ are shown.

Pairs $P_1$ to $P_7$ of electrodes are arranged one-to-one at respective levels of the observation points $Q_1$ to $Q_7$. Determination means 11 to 17 are connected one-to-one with the respective pairs $P_1$ to $P_7$ of electrodes. Each of the determination means 11 to 17 has a function of determining whether a capacitance value of a corresponding one among the pairs $P_1$ to $P_7$ of electrodes exceeds a predetermined reference value. For example, when the determination means 13 determines that the capacitance value of the pair $P_3$ of electrodes placed at the level of the observation point $Q_3$ exceeds a predetermined reference value, liquid is present at the level of the observation point $Q_3$, and when the determination means 13 determines that the capacitance value of the pair $P_3$ of electrodes placed at the level of observation point $Q_3$ does not exceed the predetermined reference value, no liquid is present at the level of the observation point $Q_3$.

When i determination means from the first to i-th ($i \in \{1, 2, ..., Z\}$) among Z determination means each output a determination result indicating that a reference value is exceeded, a water level output means 20 outputs information indicating the level of the i-th observation point. In the example illustrated in FIG. 1, the determination means 11 to 14, which correspond to the respective pairs $P_1$ to $P_4$ of electrodes and are below the liquid level L (that is, immersed in the liquid), each output a determination result indicating that the reference value is exceeded, and the determination means 15 to 17, which correspond to the respective pairs $P_5$ to $P_7$ of electrodes and are above the liquid level L (that is, not immersed in the liquid), each output a determination result indicating that the reference value is not exceeded. Therefore, the water level output means 20 outputs information indicating the level of the fourth observation point $Q_4$.

[PRIOR ART LITERATURE]

[PATENT LITERATURE]

Patent Literature 1: Japanese Patent Application Laid Open No. H11-311562

[SUMMARY OF THE INVENTION]

[PROBLEMS TO BE SOLVED BY THE INVENTION]

The water level sensor of the prior art described above locates a water level by determining the presence or absence of liquid at each of levels of two or more observation points, which are set in a direction in which a water level changes (hereinafter, referred to as the level change direction), on the basis of a capacitance value of each of two or more pairs of electrodes which are arranged one-to-one at the levels of the two or more observation points. The water level sensor of the prior art described above locates a water level approximately by discrete values. Thus, according to the water level sensor of the prior art described above, a large number of pairs of electrodes are required to locate a water level with high resolution, and as a result, a large number of conducting lines are also required to correspond to the large number of pairs of electrodes.

For example, when Z observation points are set in the level change direction to locate a water level with high resolution, the water level sensor of the prior art described above requires not only Z pairs of electrodes but also Z+1 conducting lines. This is because electrodes on one side of the Z pairs of electrodes are connected to one common conducting line, and electrodes on the other sides of the Z pairs of electrodes are connected one-to-one to Z conducting lines that differ from each other.

In view of the background art described above, an interface sensor having a configuration that allows a total number L of conducting lines drawn from the interface sensor to be less than Z+1 (where Z is a total number of observation points), and a liquid level gauge including this interface sensor will be disclosed.

[MEANS TO SOLVE THE PROBLEMS]

The herein described technical matters are not intended to expressly or implicitly limit the invention claimed in the claims, nor further to enable persons other than those benefited by the invention (for example, the applicant and the right holder) to limit the invention claimed in the claims, but are provided merely to facilitate an understanding of the gist of the present invention. An overview of the present invention from another point of view can be understood, for example, from the scope of claims at the time of filing this patent application.

The sensor of the present disclosure is a sensor for locating a position of an interface of two types of substances (that is, a first substance and a second substance different from each other).

The sensor includes K sensor blocks. K is a predetermined integer which satisfies $2 \leq K$.

The k-th sensor block among the K sensor blocks includes M(k) pairs of electrodes and n(k)+1 conducting lines, for any $k \in \{x \in N: 1 \leq x \leq K\}$. N is the set of all positive integers. n(k) is a predetermined integer satisfying $2 \leq n(k)$. $M(1) \geq 8$ holds. For any $k \in \{x \in N: 1 \leq x \leq K\}$, the following formula holds.

[FORMULA 1]

$$M(k) = \prod_{j=k}^{K} n(j)$$

The $m_k$-th pair of electrodes among the M(k) pairs of electrodes included in the k-th sensor block is placed in the $r(k,m_k)$-th plane among M(1) planes that do not coincide with each other and are parallel to each other, for any $m_k \in \{x \in N: 1 \leq x \leq M(k)\}$. The M(1) planes are arranged in order according to an order relation of elements of a set $\{x \in N: 1 \leq x \leq M(1)\}$. The following formula holds for any $k \in \{x \in N: 1 \leq x \leq K\}$ and for any $m_k \in \{x \in N: 1 \leq x \leq M(k)\}$. In this formula, n(0)=1.

[FORMULA 2]

$$r(k, m_k) = m_k \times \prod_{j=1}^{k} n(j-1)$$

The $m_k$-th pair of electrodes among the M(k) pairs of electrodes included in the k-th sensor block has one electrode, which is connected to the $s(m_k)$-th conducting line among the n(k)+1 conducting lines, and the other electrode, which is connected to the n(k)+1-th conducting line among the n(k)+1 conducting lines. The following formula holds for any $k \in \{x \in N: 1 \leq X \leq K\}$ and for any $m_k \in \{x \in N: 1 \leq x \leq M(k)\}$.

[FORMULA 3]

$$s(m_k) = \begin{cases} m_k \bmod n(k) & (m_k \bmod n(k) \neq 0) \\ n(k) & (m_k \bmod n(k) = 0) \end{cases}$$

[EFFECTS OF THE INVENTION]

According to the present invention, the total number L of conducting lines drawn from the interface sensor can be set less than Z + 1 (where Z is the total number of observation points).

[BRIEF DESCRIPTION OF THE DRAWINGS]

FIG. 1 is a diagram illustrating a configuration example of a water level sensor of a related art.
FIG. 2 is a diagram for explaining one configuration example of a sensor unit in a water level gauge according to the present invention.
FIG. 3 is a diagram for explaining another configuration example of the sensor unit in the water level gauge according to the present invention.

FIG. 4 is a diagram for explaining one configuration example of the water level gauge according to the present invention.

FIG. 5 is a diagram for explaining details of electrode pairs and their arrangement in the water level gauge illustrated in FIG. 4.

FIG. 6 is a diagram for explaining a modification of the water level gauge illustrated in FIG. 4.

FIG. 7 is a diagram for explaining another configuration example of the water level gauge according to the present invention.

FIG. 8 is a diagram for explaining still another configuration example of the water level gauge according to the present invention.

FIG. 9 illustrates a configuration example of an interface sensor of the present disclosure.

FIG. 10 illustrates a configuration example of the interface sensor of the present disclosure.

[DETAILED DESCRIPTION OF THE EMBODIMENTS]

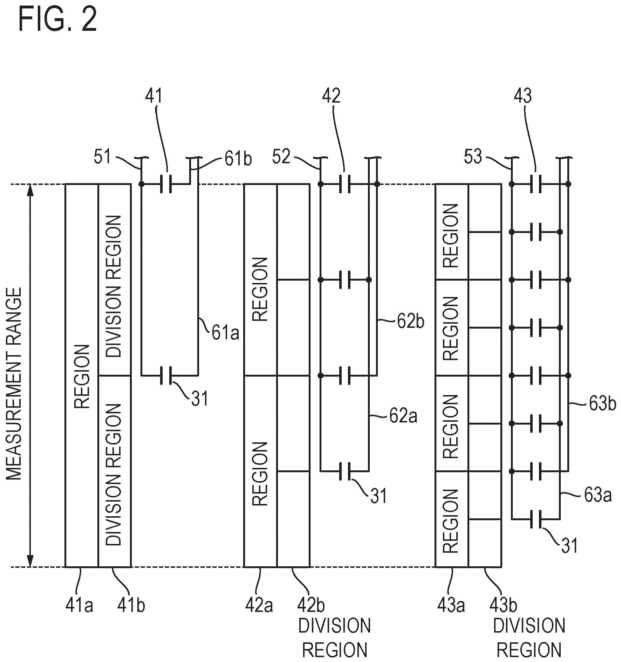

A configuration of a sensor unit in a liquid level gauge according to the present invention will be first described. In the following description regarding FIGs. 2 to 8, water will be employed as an example of a liquid.

FIG. 2 illustrates one configuration example of the sensor unit. In this example, the sensor unit includes three columns of sensors in which electrode pairs 31 are arranged in a water level detection direction. In FIG. 2, along with the arrangement of the electrode pairs 31 of the three columns of sensors 41 to 43, regions and division regions are also illustrated to explain positions where the electrode pairs 31 are positioned. Here, a predetermined range in the water level detection direction is referred to as a region, and each range obtained by dividing the region in the water level detection direction is referred to as a division region.

The sensor 41 in the first column has two division regions 41b when a measurement range of the water level gauge is considered to be a region 41a. The sensor 42 in the second column has two regions 42a, whose ranges and numbers correspond to those of the division regions 41b of the sensor 41 in the first column, and each of the regions 42a is divided into two division regions 42b. The sensor 43 in the third column has four regions 43a, whose ranges and numbers correspond to those of the division regions 42b of the sensor 42 in the second column, and each of the regions 43a is divided into two division regions 43b.

In the setting of regions and division regions described above, each of the electrode pairs 31 is positioned at a boundary of the regions or at a boundary of division regions positioned in a region in the water level detection direction. In this example, the electrode pair 31 is positioned at the boundary on the upper end of each region (upper side in the water level detection direction) for each region.

In the arrangement positions of the electrode pairs 31, as illustrated in FIG. 2, the sensor 41 has two electrode pairs 31, the sensor 42 has four electrode pairs 31, and the sensor 43 has eight electrode pairs 31. Further, the electrode pairs 31 of the sensor 42 are located at the same positions as even numbered positions (2nd, 4th, 6th, 8th) from the bottom of the eight electrode pairs 31 of the sensor 43, and the electrode pairs 31 of the sensor 41 are located at the same positions as the 4th and 8th positions from the bottom of the eight electrode pairs 31 of the sensor 43 in the water level detection direction.

One end (one electrode) of each of the electrode pairs 31 in the sensors 41 to 43 is connected to a wire 51, 52, or 53 on the input side, as illustrated in FIG. 2. On the other hand, the other ends (the other electrodes) of respective electrode pairs 31 are connected to wires on the detection side, and the other ends of the two electrode pairs 31 of the sensor 41 in the first column are connected to respective wires 61a and 61b. As for the electrode pairs 31 of the sensor 42 in the second column, the other ends of the electrode pairs 31 located at the boundaries of the regions 42a are connected in parallel with each other and are connected to a wire 62b and the other ends of the electrode pairs 31 located at the boundaries of the division regions 42b in respective regions 42a are connected in parallel with each other and are connected to a wire 62a. In a similar manner, as for the electrode pairs 31 of the sensor 43 in the third column, the other ends of the electrode pairs 31 located at the boundaries of the regions 43a are connected in parallel with each other and are connected to a wire 63b and the other ends of the electrode pairs 31 located at the boundaries of the division regions 43b in respective regions 43a are connected in parallel with each other and are connected to a wire 63a.

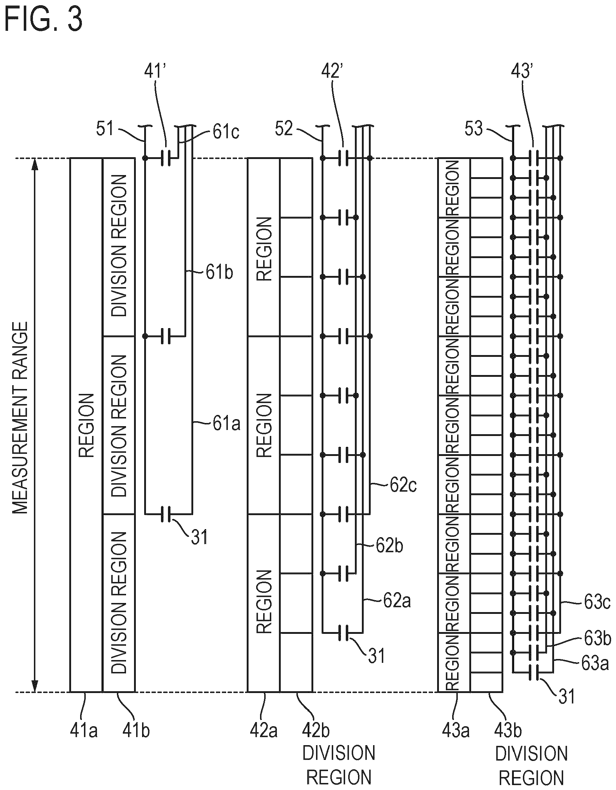

FIG. 3 illustrates a configuration example of the sensor unit different from FIG. 2. In this example, the sensor unit includes three columns of sensors 41' to 43' as is the case with the sensor unit illustrated in FIG. 2. However, a region in each of the sensors 41' to 43' is divided into three division regions. Namely, the sensor 41' in the first column has three division regions 41b when a measurement range of the water level gauge is considered to be the region 41a. The sensor 42' in the second column has three regions 42a, whose ranges and numbers correspond to those of the division regions 41b of the sensor 41' in the first column, and each of the regions 42a is divided into three division regions 42b. The sensor 43' in the third column has nine regions 43a, whose ranges and numbers correspond to those of the division regions 42b of the sensor 42' in the second column, and each of the regions 43a is divided into three division regions 43b.

Each of the electrode pairs 31 is positioned on a corresponding boundary of regions or a corresponding boundary of division regions in a similar manner to FIG. 2. Accordingly, the sensor 41' includes 3 electrode pairs 31, the sensor 42' includes 9 electrode pairs 31, and the sensor 43' includes 27 electrode pairs 31.

One end of each of the electrode pairs 31 in the sensors 41' to 43' is connected to the wire 51, 52, or 53 on the input side, as is the case with FIG. 2. As for the wiring on the detection side, the other ends of the three electrode pairs 31 of the sensor 41' in the first column are connected to the respective wires 61a, 61b, and 61c. As for the electrode pairs 31 of the sensor 42' in the second column, the other ends of the electrode pairs 31 located at the boundaries of the regions 42a are connected in parallel with each other and are connected to a wire 62c and the other ends of the electrode pairs 31 located at mutually the same boundaries of the division regions 42b in respective regions 42a are connected in parallel with each other and are connected to the wire 62a or 62b. In a similar manner, as for the electrode pairs 31 of the sensor 43' in the third column, the other ends of the electrode pairs 31 located at the boundaries of the regions 43a are connected in parallel with each other and are connected to a wire 63c and the other ends of the electrode pairs 31 located at mutually the same boundaries of the division regions 43b in respective regions 43a are connected in parallel with each other and are connected to the wire 63a or 63b.

The two configuration examples of the sensor unit are described above, but the number of sensors included in the sensor unit and the number of divisions to divide a region into division regions are not limited to the examples illustrated in FIG. 2 and FIG. 3. Namely, the sensor unit includes n columns ($n \geq 3$) of sensors, and regions and division regions defining arrangement positions of electrode pairs are defined for sensors as follows.

- The sensor in the first column is defined to have $a_1$ ($a_1 \geq 2$) division regions when a measurement range of a water level gauge is considered to be a region.
- The sensor in the second column is defined to have $a_1$ regions whose ranges and numbers correspond to those of the division regions of the sensor in the first column, where each of the regions has $a_2$ ($a_2 \geq 2$) division regions.
- The third and subsequent columns are defined in a similar way, and the sensor in the n-th column is defined to have regions whose number is obtained by multiplying the number from $a_1$ to $a_{n-1}$ and whose ranges and numbers correspond to those of division regions of a sensor in the n-1-th column, where each of the regions has $a_n$ ($a_n \geq 2$) division regions.

FIG. 2 illustrates the configuration of the sensor unit where $n=3$ and $a_1=a_2=a_3=2$, and FIG. 3 illustrates the configuration of the sensor unit where $n=3$ and $a_1=a_2=a_3=3$.

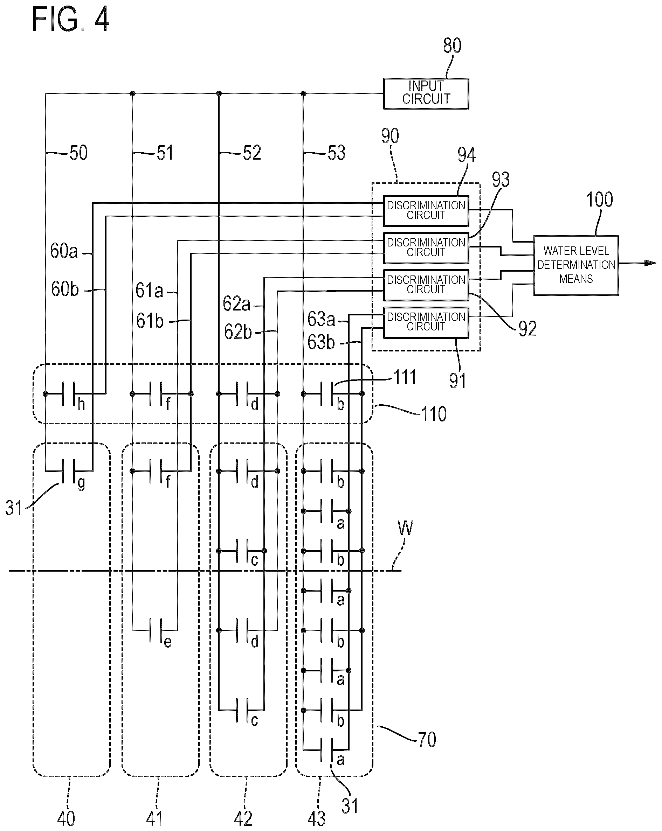

One configuration example of the water level gauge according to the present invention will now be described with reference to FIG. 4.

The water level gauge includes a sensor unit 70, an input circuit 80, a discrimination means 90, and a water level determination means 100, and further includes an adjustment unit 110 in this column, as illustrated in FIG. 4.

The sensor unit 70 includes a sensor 40 in addition to the three columns of the sensors 41 to 43 of the sensor unit illustrated in FIG. 2. The sensor 40 has one electrode pair 31 on the same position as the position of the eighth electrode pair 31 from the bottom of the sensor 43 in the water level detection direction. One end of this electrode pair 31 is connected to a wire 50 on the input side, and the other end is connected to a wire 60a on the detection side.

The electrode pairs 31 of each of the sensors 40 to 43 detect capacitance between electrodes, in this example. The electrode pairs 31 are provided with reference characters a to g indicating groups, as illustrated in FIG. 4.

The adjustment unit 110 adjusts capacitance of each of the sensors 40 to 43 as described later, and includes four capacitors 111 corresponding to the respective sensors 40 to 43, in this example. Similar to the electrode pairs 31, the capacitors 111 are also provided with reference characters b, d, f, and h indicating groups, as illustrated in FIG. 4.

Regarding the capacitor 111 corresponding to the sensor 40, one end is connected to the wire 50 and the other end is connected to a wire 60b on the detection side. As for the capacitor 111 corresponding to the sensor 41, one end is connected to the wire 51 and the other end is connected to the wire 61b. As for the capacitor 111 corresponding to the sensor 42, one end is connected to the wire 52 and the other end is connected to the wire 62b. As for the capacitor 111 corresponding to the sensor 43, one end is connected to the wire 53 and the other end is connected to the wire 63b.

The wires 50 to 53 are connected to the input circuit 80. The input circuit 80 generates and outputs a carrier wave. The discrimination means 90 includes four discrimination circuits 91 to 94, the wires 60a and 60b are connected to the discrimination circuit 94, and the wires 61a and 61b are connected to the discrimination circuit 93. Further, the wires 62a and 62b are connected to the discrimination circuit 92, and the wires 63a and 63b are connected to the discrimination circuit 91. Each of the discrimination circuits 91 to 94 discriminates a larger and smaller relationship between two detection values obtained from the two wires connected thereto.

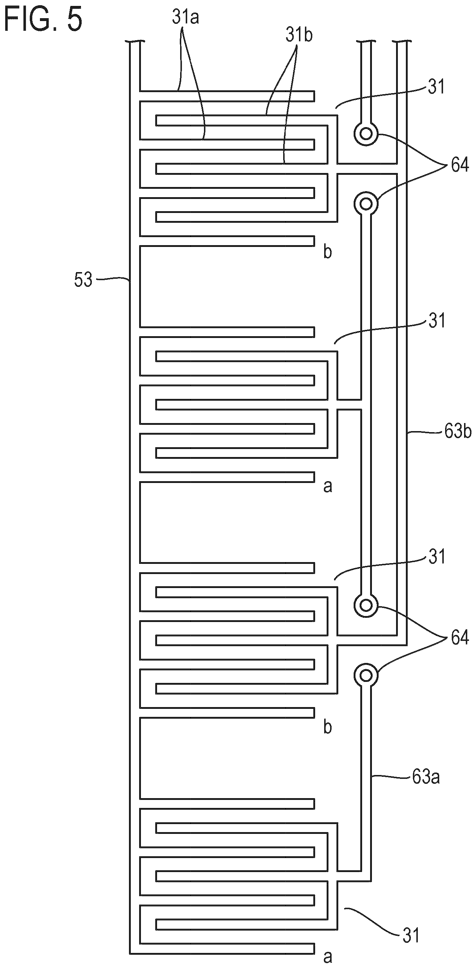

Specific configuration and arrangement of the electrode pairs 31 will now be described. FIG. 5 illustrates the lower end side of the sensor 43 as an example. Although the illustration of a substrate is omitted, the electrode pairs 31 and the wires 53, 63a, and 63b are patterned and provided on the substrate. The electrode pair 31 has a shape in which comb-shaped electrodes 31a and 31b interdigitate as illustrated in FIG. 5, in order to achieve high capacitance. In FIG. 5, 64 denotes a through hole, and the through holes 64 facing each other across the wire 63b are pattern-connected on the back side of the substrate. An insulating coating is applied to the pattern formed on the substrate.

An operation of the water level gauge illustrated in FIG. 4 will now be described using an example in which a water level W is at the position shown by the two-dot chain line in FIG. 4.

Capacitance of respective groups of the electrode pairs 31 and the capacitors 111, which are grouped by the reference characters a to h, are denoted as $C_a$ to $C_h$, capacitance obtained when one electrode pair 31 is positioned in air is denoted as $C_{air}$, and capacitance obtained when the one electrode pair 31 is positioned in water is denoted as $C_{water}$. The capacitance of the four capacitors 111 in the adjustment unit 110 are all set to 0.5 $C_{water}$, in this example. Relative permittivity of water is 80 at 20°C, where $C_{water}=80\ C_{air}$. In the case of the water level W illustrated in FIG. 4, the capacitance $C_a$ to $C_h$ can be expressed as the following formulas.

$$C_a=3\ C_{water}+C_{air}=241\ C_{air}$$

$$C_b=2.5\ C_{water}+2\ C_{air}=202\ C_{air}$$

$$C_c=C_{water}+C_{air}=81\ C_{air}$$

$$C_d=1.5\ C_{water}+C_{air}=121\ C_{air}$$

$$C_e=C_{water}=80\ C_{air}$$

$$C_f=0.5\ C_{water}+C_{air}=41\ C_{air}$$

$$C_g=C_{air}$$

$$C_h=0.5\ C_{water}=40\ C_{air}$$

Each of the discrimination circuits 91 to 94 detects and compares capacitance so as to discriminate a larger and smaller relationship and output 1 or 0. Output conditions for 1 or 0 are shown below.

Discrimination circuit 91 ... $C_a>C_b$: 1, $C_a<C_b$: 0
Discrimination circuit 92 ... $C_c>C_d$: 1, $C_c<C_d$: 0
Discrimination circuit 93 ... $C_e>C_f$: 1, $C_e<C_f$: 0
Discrimination circuit 94 ... $C_g>C_h$: 1, $C_g<C_h$: 0

$C_a$ to $C_h$ are expressed as the above. Since $C_a>C_b$, the discrimination circuit 91 outputs 1. Further, since $C_c<C_d$, the discrimination circuit 92 outputs 0. Furthermore, since $C_e>C_f$, the discrimination circuit 93 outputs 1, and since $C_g<C_h$, the discrimination circuit 94 outputs 0.

The water level determination means 100 treats the outputs of the discrimination circuits 91 to 94 as binary numbers, that is, the water level determination means 100 treats the output of the discrimination circuit 91 as $2^0$ bits, treats the output of the discrimination circuit 92 as $2^1$ bits, treats the output of the discrimination circuit 93 as $2^2$ bits, and treats the output of the discrimination circuit 94 as $2^3$ bits. As a result, the outputs of the discrimination circuits 91 to 94 become a binary number: 0101 in the water level determination means 100, and the water level determination means 100 converts the binary number into a water level with reference to the memory and outputs the water level.

Thus, the water level gauge illustrated in FIG. 4 treats a water level as a binary number. At a low water level where all the electrode pairs 31 are not immersed in water, the binary number is 0000, and at a high water level where all the electrode pairs 31 of the sensors 40 to 43 are immersed in water, the binary number is 1000.

The point where the adjustment unit 110 is provided will be described here.

For example, in terms of the capacitance of the groups a and b, if there is no capacitor 111 in the adjustment unit 110, $C_a$ and $C_b$ repeat $C_a>C_b$ and $C_a=C_b$ as the water level rises. It can be said that $C_a>C_b$ and $C_a=C_b$ are repeated as the water level rises in an ideal state without variations in the electrode pairs 31 or error factors. However, errors and other factors can cause the state of $C_a=C_b$ to become $C_a>C_b$ or $C_a<C_b$ in reality. The adjustment unit 110 avoids such an unstable state and increases detection accuracy. By adding the capacitor 111 to the group b as described above, $C_a$ and $C_b$

always repeat $C_a > C_b$ and $C_a < C_b$ as the water level rises, that is, $C_a$ and $C_b$ always have different values from each other to repeat the larger and smaller relationship.

This example uses the capacitor 111 with the capacitance of 0.5 $C_{water}$, that is, half capacitance of the capacitance obtained when one electrode pair 31 is immersed in water, for the adjustment unit 110. However, the capacitance of the capacitor 111 is not limited to this, but may be set so that the capacitance of the two groups for discriminating 0 and 1 repeats the larger and smaller relationship as the water level rises.

Such an adjustment unit does not have to limitedly employ the capacitor 111, but may employ other means. For example, another means may be provided to one group as an adjustment unit so that electrode pairs whose capacitance is half of the capacitance of the electrode pair 31 are always immersed in water, and further, one of detection values to discriminate 0 and 1 in the discrimination means may be offset.

One configuration example of the water level gauge according to the present invention has been described above, and this water level gauge is capable of detecting water levels in nine binary steps from 0000 to 1000. In the case of the configuration of the related art illustrated in FIG. 1, eight discrimination circuits (determination means) are required to detect the water level in nine steps, whereas only four discrimination circuits are required in the present example.

For example, when considering detecting a water level in 1000 steps (resolution of 1/1000 of the measurement range), the number of discrimination circuits and electrode pairs will be 1000 each, and the number of wires on the detection side from the electrode pairs to the discrimination circuits will be 1000 in a configuration as that of the related art example illustrated in FIG. 1. On the other hand, according to the water level gauge of the present invention configured to perform detection in binary numbers, 10 columns of sensors are required because $2^{10} = 1024$, and the number of determination circuits is only 10 and the number of wires on the detection side is only 20.

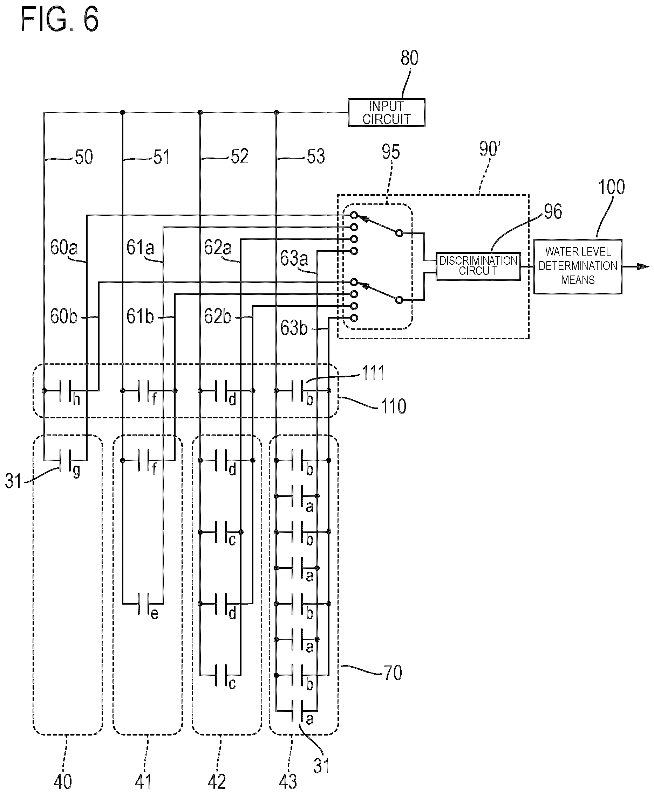

In the water level gauge described above, the discrimination means 90 includes discrimination circuits for respective sensors 40 to 43, that is, includes the four discrimination circuits 91 to 94. However, the number of discrimination circuits can be one. FIG. 6 illustrates a water level gauge with a single discrimination circuit as a modification of the water level gauge illustrated in FIG. 4, and provides the same reference characters to components corresponding to those in FIG. 4.

In this example, a discrimination means 90' is composed of a switch 95 for switching connection with each of the sensors 40 to 43, and a single discrimination circuit 96. By switching the switch 95, a detection value obtained from each of the sensors 40 to 43 is outputted to the discrimination circuit 96 in sequence. The discrimination circuit 96 compares inputted detection values and discriminates the larger and smaller relationship to output 1 or 0.

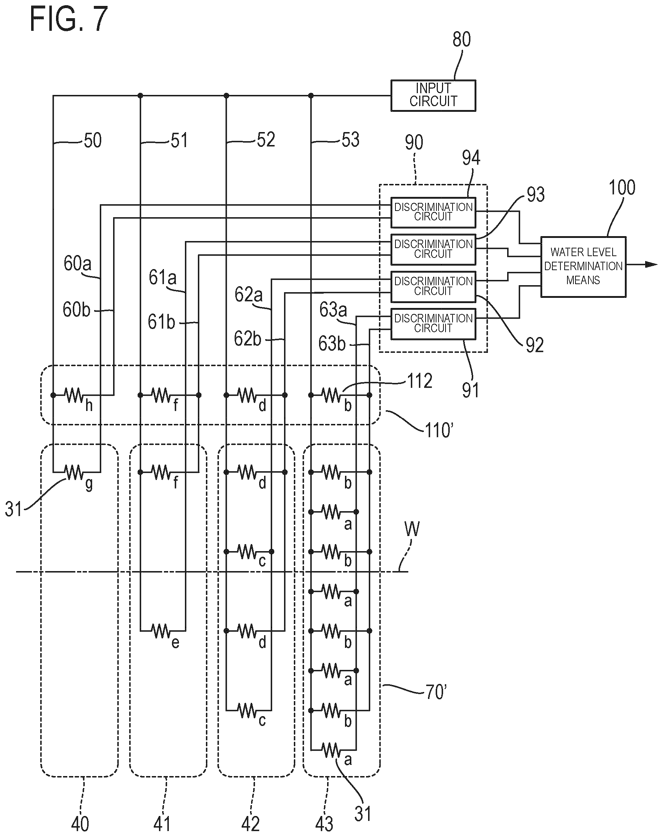

Another configuration example of the water level gauge according to the present invention illustrated in FIG. 7 will now be described.

The water level gauge illustrated in FIG. 7 is different from the water level gauge illustrated in FIG. 4 in that the electrode pairs 31 arranged in each of the sensors 40 to 43 in a sensor unit 70' detect a resistance value between electrodes and further, in that an adjustment unit 110' includes four resistors 112 corresponding to respective sensors 40 to 43. Here, although the electrode pair 31 is composed of a pair of electrodes 31a and 31b as in the configuration illustrated in FIG. 5 described above, FIG. 7 illustrates the electrode pair 31 with a symbol representing resistance (resistor).

An operation of the water level gauge illustrated in FIG. 7 will be described below, in a similar manner to FIG. 4, using an example in which the water level W is at the position shown by the two-dot chain line in FIG. 7. The input circuit 80 in this example generates and outputs an input voltage. The discrimination circuits 91 to 94 use a bridge circuit or the like to discriminate which group has a larger resistance value.

Resistance values of respective groups of the electrode pairs 31 and the resistors 112, which are grouped by the reference characters a to h similarly to FIG. 4, are denoted as $R_a$ to $R_h$, a resistance value obtained when one electrode pair 31 is positioned in air is denoted as $R_{air}$, and a resistance value obtained when the one electrode pair 31 is positioned in water is denoted as $R_{water}$. The resistance values of the four resistors 112 in the adjustment unit 110' are all set to 2 $R_{water}$, in this example. $R_{air}$ can be expressed as $R_{air} \approx \infty$. In the case of the water level W illustrated in FIG. 7, the resistance values $R_a$ to $R_h$ can be expressed as the following formulas.

$$1/R_a = (3/R_{water}) + (1/R_{air})$$

$$\therefore R_a = R_{water}/3$$

$$1/R_b = (2.5/R_{water}) + (2/R_{air})$$

$$\therefore R_b = R_{water}/2.5$$

$$1/R_c = (1/R_{water}) + (1/R_{air})$$

$$\therefore R_c = R_{water}$$

$$1/R_d = (1.5/R_{water}) + (1/R_{air})$$

$$\therefore R_d = R_{water}/1.5$$

$$R_e = R_{water}$$

$$1/R_f = (0.5/R_{water}) + (1/R_{air})$$

$$\therefore R_f = 2\ R_{water}$$

$$R_g = R_{air} \qquad \therefore R_g \approx \infty$$

$$R_h = 2\ R_{water}$$

Each of the discrimination circuits 91 to 94 detects and compares resistance values so as to discriminate a larger and smaller relationship and output 1 or 0. Output conditions for 1 or 0 are shown below.

Discrimination circuit 91 ... $R_a < R_b$: 1, $R_a > R_b$: 0
Discrimination circuit 92 ... $R_c < R_d$: 1, $R_c > R_d$: 0
Discrimination circuit 93 ... $R_e < R_f$: 1, $R_e > R_f$: 0
Discrimination circuit 94 ... $R_g < R_h$: 1, $R_g > R_h$: 0

$R_a$ to $R_h$ are expressed as the above. Since $R_a < R_b$, the discrimination circuit 91 outputs 1. Further, since $R_c > R_d$, the discrimination circuit 92 outputs 0. Furthermore, since $R_e < R_f$, the discrimination circuit 93 outputs 1, and since $R_g > R_h$, the discrimination circuit 94 outputs 0.

Similar to the above-described water level determination means 100 in FIG. 4, the water level determination means 100 treats the outputs of the discrimination circuits 91 to 94 as a binary number: 0101, converts the binary number into a water level with reference to the memory, and outputs the water level.

As with the water level gauge illustrated in Fig. 6, this water level gauge may also be configured to be provided with a switch in order to reduce the number of discrimination circuits to one. The resistor 112 is used for the adjustment unit 110' in this example, but other means may be employed as with the above-described water level gauge illustrated in FIG. 4. For example, another means may be provided to one group as an adjustment unit so that electrode pairs, whose resistance value in water is twice the resistance value of the electrode pair 31 in water, are always immersed in water, and further, one of detection values to discriminate 0 and 1 in the discrimination means may be offset.

A water level gauge in which one of the electrode pairs 31 arranged in each sensor also serves as an adjustment unit will now be described.

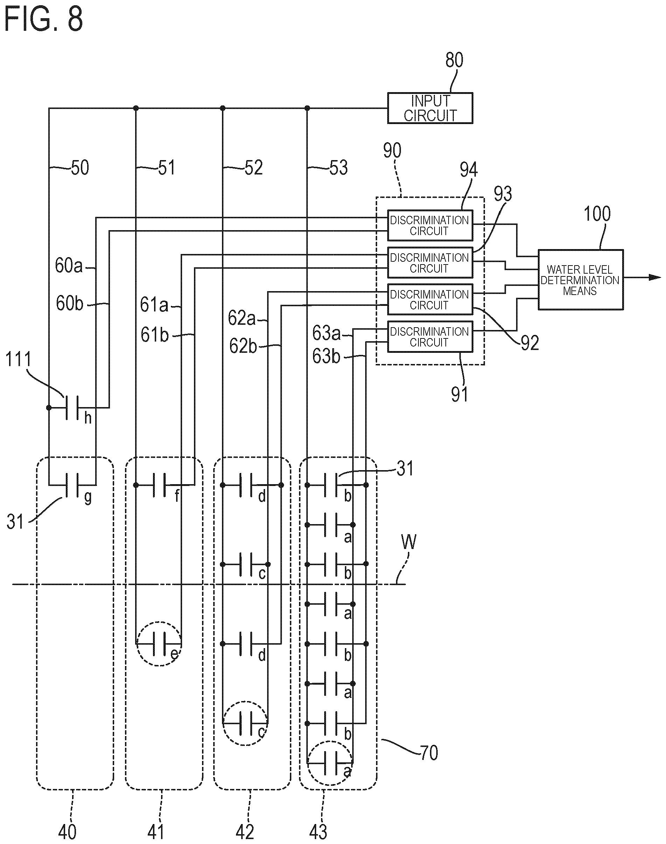

FIG. 8 illustrates such a water level gauge as a modification of the water level gauge illustrated in FIG. 4, and provides the same reference characters to components corresponding to those in FIG. 4.

In this example, the electrode pairs 31 which are located at the lowest position in the water level detection direction in the sensors 41 to 43 (in dotted circles in the drawing) serve as an adjustment unit. Namely, there is no capacitors 111 which correspond to these sensors 41 to 43 and are included in the water level gauge illustrated in FIG. 4, and only the sensor 40 including a single electrode pair 31 includes the capacitor 111 as an adjustment unit.

The capacitance of the capacitor 111 is set to 0.5 $C_{water}$, as in the case of the above-described water level gauge illustrated in FIG. 4, and the capacitance of the electrode pair 31, circled by the dotted line, is set to be half that of the other (not circled by the dotted line) electrode pairs 31. As illustrated in FIG. 8, when the water level W is the same as the water level W illustrated in FIG. 4, the capacitance $C_a$ to $C_h$ of respective groups is expressed by the following formulas, as is the case with the water level gauge illustrated in FIG. 4.

$$C_a = 2.5\ C_{water} + C_{air} = 201\ C_{air}$$

$$C_b = 2\ C_{water} + 2\ C_{air} = 162\ C_{air}$$

$$C_c = 0.5\ C_{water} + C_{air} = 41\ C_{air}$$

$$C_d = C_{water} + C_{air} = 81\ C_{air}$$

$$C_e = 0.5\ C_{water} = 40\ C_{air}$$

$$C_f = C_{air}$$

$$C_g = C_{air}$$

$$C_h = 0.5\ C_{water} = 40\ C_{air}$$

The output conditions for the discrimination circuits 91 to 94 to output 1 or 0 are the same as the conditions described above. Since $C_a > C_b$, the discrimination circuit 91 outputs 1, and since $C_c < C_d$, the discrimination circuit 92 outputs 0. Further, since $C_e > C_f$, the discrimination circuit 93 outputs 1, and since $C_g < C_h$, the discrimination circuit 94 outputs 0. Thus, the outputs of the discrimination circuits 91 to 94 are the same as those of the water level gauge illustrated in FIG. 4, and the water level can be detected in the same manner as the water level gauge illustrated in FIG. 4.

In the case of the above-described electrode pair 31 having the configuration as that illustrated in FIG. 5, the capacitance can be halved by, for example, reducing the number of comb teeth formed by the electrodes 31a and 31b.

The water level gauge whose electrode pair 31 detects a resistance value between electrodes, illustrated in FIG. 7, can also employ the above-described configuration in which one of the electrode pairs 31 arranged in each sensor serves as an adjustment unit. In this case, for example, resistance values of the electrode pairs 31, which are located at the lowest position in the water level detection direction in the sensors 41 to 43, may be twice resistance values of other (not located at the lowest position in the water level detection direction) electrode pairs 31.

The electrode pair 31 that also serves as an adjustment unit is not limited to the electrode pair 31 located at the lowest position in the water level detection direction, but may be located at other positions.

In each of the water level gauges described above, the electrode pairs of the sensors are grouped into two groups, and the discrimination means outputs a discrimination result for each sensor as a binary number to the water level determination means, but the configuration is not limited to this. For example, as in the configuration of the sensor unit illustrated in FIG. 3, the electrode pairs of the sensors may be grouped into three groups, and the discrimination means may output a discrimination result for each sensor as a ternary number to the water level determination means.

The number of division regions for a region in one sensor is the same for each region, but when a region is divided into a plurality of division regions, the plurality of division regions do not necessarily have to have the same range (width) in the water level detection direction.

The water level gauges described above can be used to measure water levels in rivers and the like, for example. The characteristic configuration of the water level gauges according to the present invention can also be applied, for example, to a liquid level gauge that detects the liquid level of a liquid in a tank.

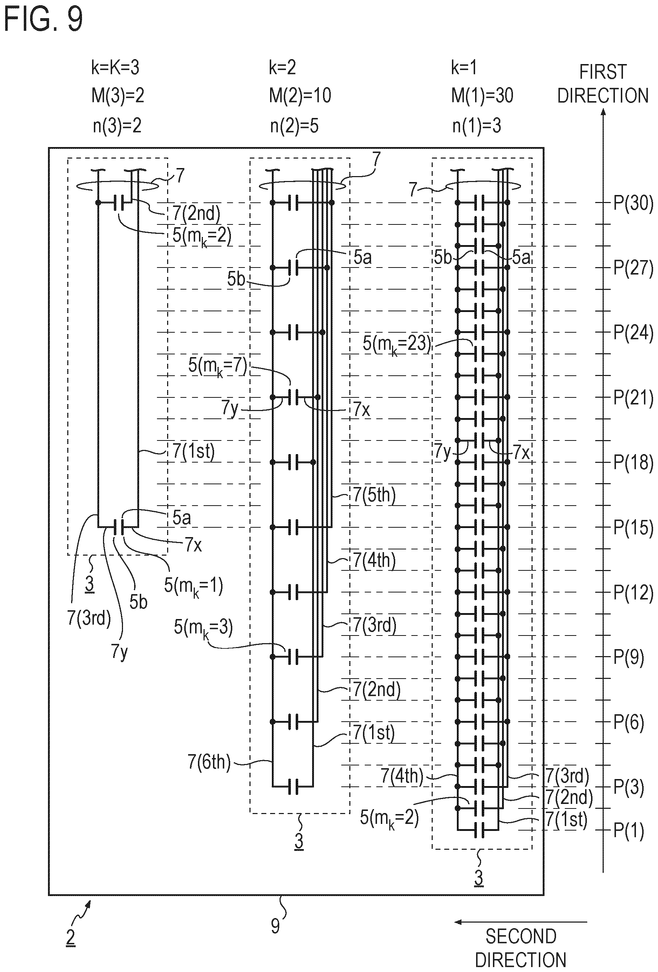

Referring to FIG. 9 illustrating a non-limiting example, an interface sensor and a liquid level gauge including the interface sensor according to the present disclosure will be described from other perspectives.

An interface sensor 2 disclosed herein is a sensor for locating a position of an interface between two types of substances (that is, a first substance and a second substance that are different from each other). For accurately locating the position, the number of interfaces needs to be 1 or 0 in the range from a plane P(1) to a plane P(M(1)) which will be described later. The interface sensor 2 includes E pairs 5 of electrodes as expressed in Formula (4) below. The position of the interface between the first substance and the second substance is located by using physical quantities produced in each of the E pairs 5 of electrodes, corresponding to a property of the first substance or second substance present between electrodes of each of the E pairs 5 of electrodes. The "interface" is a contact boundary between the first substance as a homogeneous phase and the second substance as a homogeneous phase. The "homogeneous phase" is an entity of a material system which is uniform in chemical composition and physical state. In other words, when the physical properties and chemical properties of any part V of an entity of a certain material system are the same as the physical properties and chemical properties of any part W which differs from the part V of the entity of the material system respectively, the entity of the material system is a "homogeneous phase". A typical example of the interface sensor 2 is a sensor for locating the position of an interface between a liquid (for example, water) as the first substance and a gas (for example, air) as the second substance.

The configuration of the interface sensor 2 will be described. The reference characters appearing in the following description are unrelated to the reference characters used in the above description of the embodiment. Furthermore, $RC=\varepsilon\rho$ holds, where C is capacitance between two conductors with equal positive and negative charges, R is electrical resistance between the two conductors, $\varepsilon$ is dielectric constant of a medium between the two conductors, and $\rho$ is electrical resistivity of the medium between the two conductors. Therefore, only the case of the capacitance of the pair 5 of electrodes will be described, and the description of the case of the electrical resistance of the pair 5 of electrodes will be omitted.

The interface sensor 2 includes K sensor blocks 3. Here, K is a predetermined integer satisfying $2\leq K$.

Although not limited thereto, the K sensor blocks 3 are formed on F substrates 9 each of which has a flat plate shape. F is a predetermined integer satisfying $1\leq F\leq K$. When F<K, there is a substrate 9 which has two or more sensor blocks 3. In the example illustrated in FIG. 9, F=1. When $F\geq 2$, although not limited thereto, the F substrates 9 may be arranged on a single plane, arranged like angle steel or channel steel, or arranged like a triangular pipe or square pipe.

The k-th sensor block 3 among the K sensor blocks 3 includes M(k) pairs 5 of electrodes and n(k)+1 conducting lines 7. The M(k) pairs 5 of electrodes included in the k-th sensor block 3 have the same capacitance $C_k$ as each other when all spaces-each space being a space between electrodes of any of the M(k) pairs 5 of electrodes-are filled with, for example, the first substance. The capacitance $C_k$ of each of the M(k) pairs 5 of electrodes included in the k-th sensor block 3 may be the same as or different from capacitance $C_j$ of each of M(j) pairs 5 of electrodes included in the j-th ($j\neq k$) sensor block 3. The n(k)+1 conducting lines 7 are conducting lines drawn out from the sensor block 3 and are connected to the M(k) pairs 5 of electrodes as described later. The n(k)+1 conducting lines 7 are connected to a detection circuit which will be described later. In FIG. 9, only some pairs of electrodes and some conducting lines are provided with reference signs for ease of viewing the drawing. k is a parameter for representing an integer which satisfies $1\leq k\leq K$, that is, $k\in\{x\in N: 1\leq x\leq K\}$. N is the set of all positive integers. For any $k\in\{x\in N:1\leq x\leq K\}$, n(k) is a predetermined integer satisfying $2\leq n(k)$. For any $k\in\{x\in N:1\leq x\leq K\}$, M(k) is expressed by Formula (1). The symbol "$\times$" denotes multiplication. M(1), that is, the number of pairs 5 of electrodes included in the first sensor block 3, defines the resolution of the interface sensor 2. That is, M(1) corresponds to the total number of "observation points" mentioned above (this total number has been denoted by the symbol Z in the description of the prior art). Although details will become clear from Formulas (4) and (5) shown later, $M(1)\geq 8$ needs to be satisfied in order to allow the total number L of conducting lines 7 drawn from the interface sensor 2 to be less than the sum of 1 and the total number M(1) of observation points. Furthermore, when M(1)=8, K=2 needs to be satisfied in order to allow the total number L of conducting lines 7 drawn from the interface sensor 2 to be less than the sum of 1 and the total number M(1) of observation points.

[FORMULA 4]

$$M(k) = \prod_{j=k}^{K} n(j) = n(K) \times \cdots \times n(k) \tag{1}$$

In designing of the interface sensor 2, the value of M(1), which is related to the resolution of the interface sensor 2, is customarily determined first. From this perspective, n(k) is a positive divisor of M(1) (excluding 1 and M(1)). Accordingly, n(k)<M(1) holds for any $k\in\{x\in N: 1\leq x\leq K\}$. Note that the indication of the M(1) is not unique. For example, when M(1)=60, M(1) has two or more indications (that is, two or more ways of factoring) such as:

    M(1)=2×30 (that is, K=2, n(1)=30, n(2)=2),
    M(1)=3×20 (that is, K=2, n(1)=20, n(2)=3),
    M(1)=12×5 (that is, K=2, n(1)=5, n(2)=12),
    M(1)=4×3×5 (that is, K=3, n(1)=5, n(2)=3, n(3)=4),
    M(1)=5×6×2 (that is, K=3, n(1)=2, n(2)=6, n(3)=5), and
    M(1)=2×3×2×5 (that is, K=4, n(1)=5, n(2)=2, n(3)=3, n(4)=2).

When M(1) has two or more indications, a person implementing the interface sensor 2 can freely select one indication, by taking into account the ease of implementation of the interface sensor 2, the manufacturing cost of the interface sensor 2, the environment in which the interface sensor 2 is used, and so forth. In other words, the two or more indications of M(1) mean the degree of freedom in designing the interface sensor 2.

The $m_k$-th pair 5 of electrodes among the M(k) pairs 5 of electrodes included in the k-th ($k\in\{x\in N:1\leq x\leq K\}$) sensor

block 3 is placed in the $r(k,m_k)$-th plane $P(r(k,m_k))$ among the $M(1)$ planes. $m_k$ is a parameter for representing an integer which satisfies $1 \leq m_k \leq M(k)$, that is, $m_k \in \{x \in N: 1 \leq x \leq M(k)\}$. For any $k \in \{x \in N: 1 \leq x \leq K\}$ and for any $m_k \in \{x \in N: 1 \leq x \leq M(k)\}$, $r(k, m_k)$ is expressed by Formula (2). The $M(1)$ planes $P(1), ..., P(M(1))$ do not coincide with each other and are parallel to each other. The $M(1)$ planes $P(1), ..., P(M(1))$ are arranged in the space in order according to an order relation of elements of the set $\{x \in N: 1 \leq x \leq M(1)\}$ (that is, the order relation of natural numbers). Specifically, there is the $q$-th $(q \in \{x \in N: 2 \leq x \leq p-1\})$ plane $P(q)$ between the first plane $P(1)$ and the $p$-th $(p \in \{x \in N: 3 \leq x \leq M(1)\})$ plane $P(p)$. More simply stated, when the normal direction of the $M(1)$ planes $P(1), ..., P(M(1))$ parallel to each other is referred to as a first direction, $M(1)$ planes $P(1), ..., P(M(1))$ are arranged in this order in the first direction. For any $g \in \{x \in N: 1 \leq x \leq M(1)-2\}$ and for any $h \in \{x \in N: g+1 \leq x \leq M(1)-1\}$, the distance between the $g$-th plane $P(g)$ and the $g+1$-th plane $P(g+1)$ may be equal to or unequal to the distance between the $h$-th plane $P(h)$ and the $h+1$-th plane $P(h+1)$. For example, it is preferable to narrow the distance between adjacent planes in a measurement range where a position of an interface is desired to be more precisely located. In the $k$-th $(k \in \{x \in N: 1 \leq x \leq K\})$ sensor block 3, although not limited thereto, the $M(k)$ pairs 5 of electrodes are customarily arranged in a straight line, but for example, arrangement in the shape of a walking footprint may be employed.

[FORMULA 5]

$$r(k, m_k) = m_k \times \prod_{j=1}^{k} n(j-1) \tag{2}$$

From the viewpoint of the ease of design and ease of manufacture of the interface sensor 2, the K sensor blocks 3 are customarily arranged in a second direction which is orthogonal to the first direction. The total number of possible arrangement patterns of the K sensor blocks 3 in the second direction is $K!$, namely, $\Pi_{k-1}{}^{K}k$. Incidentally, when the first direction is the vertical direction, the "plane" may be rephrased as "level", for example.

The $m_k$-th $(m_k \in \{x \in N: 1 \leq x \leq M(k)\})$ pair 5 of electrodes among the $M(k)$ pairs 5 of electrodes included in the $k$-th $(k \in \{x \in N: 1 \leq x \leq K\})$ sensor block 3 has one electrode 5a, which is connected to the $s(m_k)$-th conducting line 7 among the $n(k)+1$ conducting lines 7, and the other electrode 5b, which is connected to the $n(k)+1$-th conducting line 7 among the $n(k)+1$ conducting lines 7. The one electrode 5a of the $m_k$-th $(m_k \in \{x \in N: 1 \leq x \leq M(k)\})$ pair 5 of electrodes and the $s(m_k)$-th conducting line 7 are connected with each other via a branch line 7x, in this example. The other electrode 5b of the $m_k$-th $(m_k \in \{x \in N: 1 \leq x \leq M(k)\})$ pair 5 of electrodes and the $n(k)+1$-th conducting line 7 are connected with each other via a branch line 7y, in this example. $s(m_k)$ is an integer which satisfies $1 \leq s(m_k) \leq n(k)$, that is, $s(m_k) \in \{x \in N: 1 \leq x \leq n(k)\}$. For any $k \in \{x \in N: 1 \leq x \leq K\}$ and for any $m_k \in \{x \in N: 1 \leq x \leq M(k)\}$, Formula (3) holds. In Formula (3), the symbol "mod" represents a remainder operation, where $m_k \bmod n(k)$ is the remainder obtained by Euclidean division of a dividend $m_k$ by a divisor $n(k)$.

[FORMULA 6]

$$s(m_k) = \begin{cases} m_k \bmod n(k) & (m_k \bmod n(k) \neq 0) \\ n(k) & (m_k \bmod n(k) = 0) \end{cases} \tag{3}$$

As is clear from the above description, the number E of pairs 5 of electrodes included in the interface sensor 2 is given by Formula (4), and the number L of conducting lines 7 drawn out from the interface sensor 2 is given by Formula (5). Under the above conditions, $L < M(1)+1$ can be realized.

[FORMULA 7]

$$E = \sum_{k=1}^{K} M(k) = \sum_{k=1}^{K} \prod_{j=k}^{K} n(j) \tag{4}$$

$$L = \sum_{k=1}^{K} (n(k) + 1) \tag{5}$$

An example of a method for locating a position of an interface using the interface sensor 2 will now be described. In the $k$-th $(k \in \{x \in N: 1 \leq x \leq K\})$ sensor block 3, a detection circuit, which is not shown, compares a difference $D(t_k)$ with a predetermined threshold value $\delta$. The difference $D(t_k)$ is a difference between a composite of physical quantities (for example, composite capacitance) produced in respective pairs of electrodes connected to the $t_k$-th conducting line 7 and a composite of physical quantities (for example, composite capacitance) produced in respective pairs of electrodes connected to the $t_k$+1-th conducting line 7. $t_k$ is a parameter for representing an integer which satisfies $1 \leq t_k \leq n(k)-1$, that is, $t_k \in \{x \in N:1 \leq x \leq n(k)-1\}$. As a result of the comparison, for example, when $D(T_k)>\delta$ holds for a certain $T_k \in \{x \in N:1 \leq x \leq n(k)-1\}$, candidates of a position of an interface are given as $b(k)+1$ intervals each defined by a pair of two planes expressed by Formula (6). Here, when k=K, y=0 is defined. One "interval" is a region between the two planes expressed by Formula (6). When $D(t_k) \leq \delta$ holds for all $t_k$, either the interface has not reached the plane P(1), or the interface has passed across the plane P(M(1)). Incidentally, the detection circuit may be a component of the interface sensor 2 or may be a physical entity independent of the interface sensor 2. In the latter case, the detection circuit may be a component of the liquid level gauge including the interface sensor 2. The detection circuit is not limited to but may be a detection circuit of prior art; a detection circuit, which includes an AC signal generator that generates an AC signal to be applied to the n(k)+1-th conducting line 7 for any $k \in \{x \in N:1 \leq x \leq K\}$), and a comparator which compares the difference $D(t_k)$ and the threshold value $\delta$ for any $t_k \in \{x \in N:1 \leq x \leq n(k)-1\}$; the detection circuit (including the input circuit 80 and the discrimination means 90) illustrated in FIG. 4 and FIG. 7; the detection circuit (including the input circuit 80 and the discrimination means 90') illustrated in FIG. 6; or a detection circuit including a programmable logic device (PLD). Examples of the PLD include a field-programmable gate array (FPGA).
[FORMULA 8]

$$P\left((T_k + y \times n(k)) \times \prod_{j=1}^{k} n(j-1)\right), \ P\left((T_k + 1 + y \times n(k)) \times \prod_{j=1}^{k} n(j-1)\right) \quad (6)$$

$$y \in \{x \in N : 0 \leq x \leq b(k)\}, \qquad b(k) = \left(\prod_{j=k+1}^{K} n(j)\right) - 1$$

As an example, a position of an interface can be located by the algorithm shown in Table 1. In other words, an interval common to each sensor block 3 is identified as an interval where an interface exists, except a state where the interface has not reached the plane P(1) and a state where the interface has passed across the plane P(M(1)). The algorithm shown in Table 1 assumes that there exists $T_K \in \{x \in N:1 \leq x \leq n(K)-1\}$ satisfying $D(T_K)>\delta$ in the K-th sensor block 3. For example, when K' is assumed to be an integer that satisfies $1<K'<K$ and $T_{K'+1} \in \{x \in N:1 \leq x \leq n(K'+1)-1\}$ satisfying $D(T_{K'+1})>\delta$ does not exist in the K'+1-th sensor block 3 and $T_{K'} \in \{x \in N:1 \leq x \leq n(K')-1\}$ satisfying $D(T_{K'})>\delta$ exists in the K'-th sensor block 3, it is sufficient to rewrite K to K' in the algorithm shown in Table 1. When K'=1, an interface exists in an interval corresponding to y=0 among b(1)+1 intervals defined by a pair of two planes expressed by Formula (6).

[TABLE 1]

$$upper = (T_K + 1) \times \prod_{j=1}^{K} n(j-1)$$

$$lower = T_K \times \prod_{j=1}^{K} n(j-1)$$

$$\textbf{for } k = K - 1 \textbf{ to } 1 \textbf{ (step}: -1\textbf{)}$$

$$b(k) = \left( \prod_{j=k+1}^{K} n(j) \right) - 1, \qquad r(k) = \prod_{j=1}^{k} n(j-1)$$

$$\textbf{for } y = 0 \textbf{ to } b(k) \textbf{ (step}: +1\textbf{)}$$

$$\textbf{if } ((T_k + y \times n(k)) \times r(k) > lower \textbf{ and }$$

$$(T_k + 1 + y \times n(k)) \times r(k) < upper) \textbf{ then}$$

$$upper = (T_k + 1 + y \times n(k)) \times r(k)$$

$$lower = (T_k + y \times n(k)) \times r(k)$$

$$\textbf{goto G}:$$

$$\textbf{end if}$$

$$\textbf{next } y$$

$$\textbf{G}:$$

$$\textbf{next } k$$

$$\textbf{output}: \ P(lower), \ P(upper)$$

The interface sensor 2 may include a pair of electrodes to determine that the interface has not reached the plane P(1) and/or a pair of electrodes to determine that the interface has passed across the plane P(M(1)). The former pair of electrodes is not essential because it can be seen that the interface has not reached the plane P(1) when $D(t_k) \leq \delta$ holds for all $t_k$ in the first sensor block 3. The latter pair of electrodes is, for example, the pair of electrodes included in the leftmost sensor block illustrated in FIG. 4.

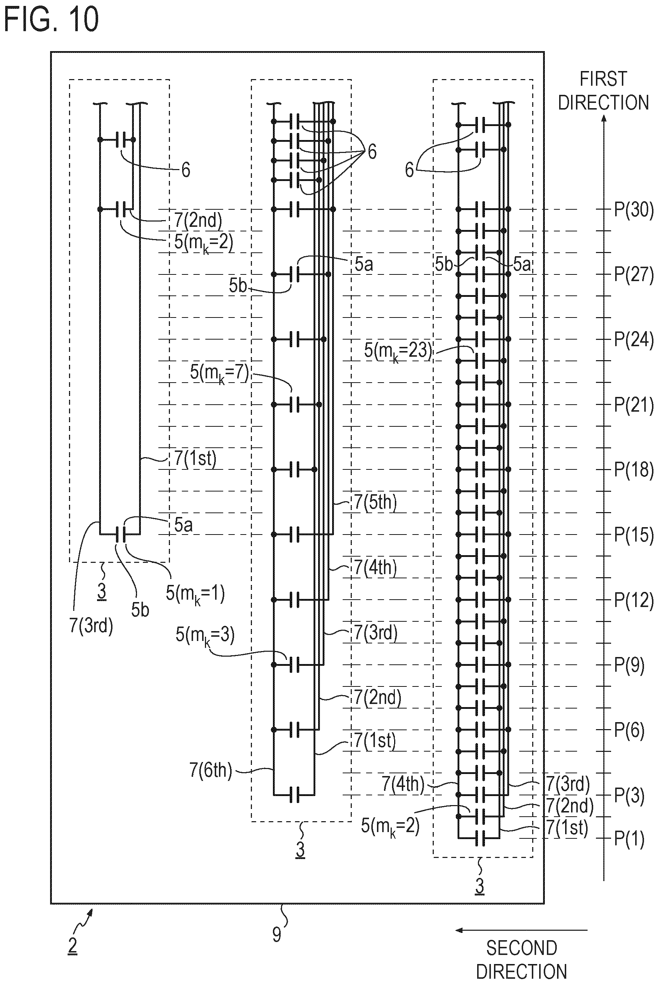

The k-th ($k \in \{x \in N : 1 \leq x \leq K\}$) sensor block 3 of the interface sensor 2 may include n(k)-1 pairs 6 of electrodes (which correspond to one pair 111 of electrodes in the example illustrated in FIG. 4) for accuracy improvement (see the configuration in FIG. 10 based on the configuration example in FIG. 9). One electrode of the i-th ($i \in \{x \in N : 1 \leq x \leq n(k)-1\}$) pair 6 of electrodes among the n(k)-1 pairs 6 of electrodes is connected, for example, to the i+1-th conducting line 7 and the other electrode of the same is connected to the n(k)+1-th conducting line 7. The n(k)-1 pairs 6 of electrodes are placed in n(k)-1 planes $P_k$, which do not coincide with each other and are parallel to each other. The n(k)-1 planes $P_k$ are placed in a half-space into which an interface enters when the interface passes across the M(1)-th plane P(M(1)). The n(k)-1 planes $P_k$ can be freely defined in each sensor block 3 under the condition that "the n(k)-1 planes $P_k$ are placed in the half-space into which an interface enters when the interface passes across the M(1)-th plane P(M(1))". In the example illustrated in FIG. 10, the n(k)-1 (=2) planes in the first sensor block 3 are denoted by $P_1(1)$ and $P_1(2)$. For a case of n(k)=2,

$$C_{k,2,(1)} + \Delta_1 < C_{k,1} - C_{k,2} - \Delta_2$$

is satisfied, and for a case of n(k)>2,

$$C_{k,2,(1)} + \Delta_1 < C_{k,1} - C_{k,2} - \Delta_2,$$

and

$$C_{k,2,(j)} + \Delta_1 < C_{k,2,(j+1)} < C_{k,2,(j)} + C_{k,1} - C_{k,2} - \Delta_2$$

are satisfied for any $j \in \{x \in N : 1 \leq x \leq n(k)-2\}$, where $C_{k,1}$ is the capacitance of the pair 5 of electrodes included in the k-th sensor block 3 in the state where the space between electrodes of the pair 5 of electrodes is filled with the first substance;

$C_{k,2}$ is the capacitance of the pair 5 of electrodes included in the k-th sensor block 3 in the state where the space between electrodes of the pair 5 of electrodes is filled with the second substance; $C_{k,2} < C_{k,1}$ holds; $\Delta_1$ is capacitance which is predetermined in consideration of capacitance measurement errors; $\Delta_2$ is capacitance which is predetermined in consideration of capacitance measurement errors; and further, $C_{k,2,(i)}$ is the capacitance of the i-th (i∈ {x∈ N:1≤x≤n(k)-1}) pair 6 of electrodes in a state where all spaces-each space being a space between electrodes of any of the n(k)-1 pairs 6 of electrodes-are filled with the second substance. In this case, it is desirable that none of the n(k)-1 pairs 6 of electrodes is filled with the first substance.

The above description has given the condition that "the M(k) pairs 5 of electrodes included in the k-th sensor block 3 have the same capacitance $C_k$ as each other when all spaces of electrodes in the M(k) pairs 5 of electrodes are filled with, for example, the first substance". However, the condition is not limited to this. In order to improve accuracy, the following condition is also allowed.

(Condition) "For a case of n(k)=2,

$$C_{k,2,(1)} < C_{k,2,(2)} + \Delta_1 < C_{k,1,(1)} + \Delta_2 < C_{k,1,(2)}$$

is satisfied, and for a case of n(k)>2,

$$C_{k,2,(j)} < C_{k,2,(j+1)} + \Delta_1 < C_{k,1,(j)} + \Delta_2 < C_{k,1,(j+1)} < C_{k,1,(j)} + C_{k,1} - C_{k,2} - \Delta_3$$

is satisfied for any j∈ {x∈ N:1≤x≤n(k)-1}, where $C_{k,1,(J)}$ is the capacitance of the J-th (J∈ {x∈ N:1≤x≤n(k)}) pair 5 of electrodes among the M(k) pairs 5 of electrodes included in the k-th sensor block 3 in the state where the space between electrodes of the pair 5 of electrodes is filled with the first substance; $C_{k,2,(J)}$ is the capacitance of the J-th (J∈ {x∈ N:1≤x≤n(k)}) pair 5 of electrodes among the M(k) pairs 5 of electrodes included in the k-th sensor block 3 in the state where the space between electrodes of the pair 5 of electrodes is filled with the second substance; $C_{k,1}$ is the capacitance of the J-th (J∈ {X∈ N:n(k)+1≤x≤M(k)}) pair 5 of electrodes among the M(k) pairs 5 of electrodes included in the k-th sensor block 3 in the state where the space between electrodes of the pair 5 of electrodes is filled with the first substance; $C_{k,2}$ is the capacitance of the J-th (J∈ {x∈N:n(k)+1≤x≤M(k)}) pair 5 of electrodes among the M(k) pairs 5 of electrodes included in the k-th sensor block 3 in the state where the space between electrodes of the pair 5 of electrodes is filled with the second substance; $C_{k,2} < C_{k,1}$ holds; $\Delta_1$ is capacitance which is predetermined in consideration of capacitance measurement errors; $\Delta_2$ is capacitance which is predetermined in consideration of capacitance measurement errors; and $\Delta_3$ is capacitance which is predetermined in consideration of capacitance measurement errors."

A specific configuration example of the interface sensor 2 is illustrated in FIG. 9. The configuration example illustrated in FIG. 9 is an example where M(1)=30 and K=3. In the example illustrated in FIG. 9, M(1)=2×5×3 is employed as the factorization based on three factors of M(1). That is, n(1)=3, n(2)=5, and n(3)=2. Therefore, from Formula (1), M(1) =30, M(2)=10, and M(3)=2.

The $m_1$-th ($m_1$∈ {x∈N:1≤x≤30}) pair 5 of electrodes among 30 pairs 5 of electrodes included in the first sensor block 3 is placed in the $r(1,m_1)$-th plane $P(r(1,m_1))$ among 30 planes. Here, from Formula (2), $r(1,m_1)=m_1$. In short, the p-th (p∈ {x∈N:1≤x≤30}) pair 5 of electrodes included in the first sensor block 3 is placed in the p-th plane P(p).

The $m_2$-th ($m_2$∈ {x∈N:1≤x≤10}) pair 5 of electrodes among 10 pairs 5 of electrodes included in the second sensor block 3 is placed in the $r(2,m_2)$-th plane $P(r(2,m_2))$ among the 30 planes. Here, from Formula (2), $r(2,m_2)=3×m_1$. In short, the p-th (p∈ {x∈N:1≤x≤10}) pair 5 of electrodes included in the second sensor block 3 is placed in the (3×p)-th plane P(3×p). For example, the seventh (p=7∈ {x∈N:1≤x≤10}) pair 5 of electrodes included in the second sensor block 3 is placed in the 21st plane P(21).

The $m_3$-th ($m_3$∈ {x∈N:1≤x≤2}) pair 5 of electrodes among two pairs 5 of electrodes included in the third sensor block 3 is placed in the $r(3,m_3)$-th plane $P(r(3,m_3))$ among the 30 planes. Here, from Formula (2), $r(3,m_3)=15×m_1$. In short, the p-th (p∈ {x∈N:1≤x≤2}) pair 5 of electrodes included in the third sensor block 3 is placed in the (15×p)-th plane P(15×p). For example, the first (p=1∈ {x∈N:1≤x≤2}) pair 5 of electrodes included in the third sensor block 3 is placed in the 15th plane P(15).

The mi-th ($m_1$∈ {x∈N:1≤x≤30}) pair 5 of electrodes among the 30 pairs 5 of electrodes included in the first sensor block 3 has one electrode 5a, which is connected to the $s(m_1)$-th conducting line 7 among four conducting lines 7, and the other electrode 5b, which is connected to the fourth conducting line 7 among the four conducting lines 7. From Formula (3), for example, one electrode 5a of the seventh pair 5 of electrodes is connected to the first conducting line 7 (7 mod 3 = 1), one electrode 5a of the 17th pair 5 of electrodes is connected to the second conducting line 7 (17 mod 3 = 2), and one electrode 5a of the 24th pair 5 of electrodes is connected to the first conducting line 7 (24 mod 3 = 0).

The $m_2$-th ($m_2$∈ {x∈N:1≤x≤10}) pair 5 of electrodes among the 10 pairs 5 of electrodes included in the second sensor block 3 has one electrode 5a, which is connected to the $s(m_2)$-th conducting line 7 among six conducting lines 7, and the other electrode 5b, which is connected to the sixth conducting line 7 among the six conducting lines 7. From Formula (3), one electrode 5a of each of the first and sixth pairs 5 of electrodes is connected to the first conducting line 7 (1 mod 5 = 6 mod 5 = 1), one electrode 5a of each of the second and seventh pairs 5 of electrodes is connected to the second conducting line 7 (2 mod 5 = 7 mod 5 = 2), one electrode 5a of each of the third and eighth pairs 5 of electrodes is connected to the third conducting line 7 (3 mod 5 = 8 mod 5 = 3), one electrode 5a of each of the fourth and ninth pairs 5 of electrodes is connected to the fourth conducting line 7 (4 mod 5 = 9 mod 5 = 4), and one electrode 5a of each of the fifth and tenth pairs 5 of electrodes is connected to the fifth conducting line 7 (5 mod 5 = 10 mod 5 = 0).

The $m_3$-th ($m_3 \in \{x \in N : 1 \le x \le 2\}$) pair 5 of electrodes of the two pairs 5 of electrodes included in the third sensor block 3 has one electrode 5a, which is connected to the $s(m_3)$-th conducting line 7 among three conducting lines 7, and the other electrode 5b, which is connected to the third conducting line 7 among the three conducting lines 7. From Formula (3), one electrode 5a of the first pair 5 of electrodes is connected to the first conducting line 7 (1 mod 2 = 1), and one electrode 5a of the second pair 5 of electrodes is connected to the second conducting line 7 (2 mod 2 = 0).

The number E of pairs 5 of electrodes included in the configuration example of the interface sensor 2 illustrated in FIG. 9 is 42 from Formula (4), and the number L of conducting lines 7 is 13 from Formula (5). The total number M(1) of observation points is 30, therefore satisfying L<M(1)+1. According to the water level gauge of the prior art illustrated in FIG. 1, the number of conducting lines is 31 (=M(1)+1). Further, although not shown, for example, when M(1)=1440, K=5, n(1)=5, n(2)=3, n(3)=2, n(4)=8, and n(5)=6, the number L of conducting lines 7 in the interface sensor 2 is 29, while according to the water level gauge of the prior art illustrated in FIG. 1, the number of conducting lines is 1441 (=M(1)+1).

The number F of substrates 9 is 1 in the example illustrated in FIG. 9, but F=2 or F=3 may be employed. When F=2, for example, the first sensor block 3 and the second sensor block 3 are formed on the first substrate, and the third sensor block 3 is formed on the second substrate.

The liquid level gauge disclosed herein includes the above-described interface sensor 2, the first substance is a liquid, and the second substance is a gas. In the liquid level gauge, the first direction is preferably a vertical direction, but is not limited thereto.

<Addendum>

While the present invention has been described with reference to the exemplary embodiment, it will be understood by those skilled in the art that various changes may be made and equivalents may be substituted for elements thereof without departing from the scope of the present invention. In addition, many modifications may be made to adapt a particular system, device, or component thereof to the teachings of the present invention without departing from the essential scope thereof. Therefore, it is intended that the present invention is not limited to the particular embodiment disclosed for carrying out the present invention, but that the present invention will include all embodiments falling within the scope of the appended claims.

Moreover, the use of the terms "first", "second", and the like do not denote any order or importance, but rather the terms "first", "second", and the like are used to distinguish one element from another. The terminology used in the present specification is for the purpose of describing the embodiment and is not intended to limit the present invention. It will be further understood that the terms "comprise" and "include" and inflected forms thereof, when used in the present specification and/or the appended claims, specify the presence of stated features, steps, operations, elements, and/or components, but do not preclude the presence or addition of one or more other features, steps, operations, elements, components, and/or groups thereof. The term "and/or", if any, includes any and all combinations of one or more of the associated listed items. In the claims and the specification, unless otherwise specified, "connect", "join", "couple", "interlock", or synonyms therefor and all the word forms thereof do not necessarily deny the presence of one or more intermediate elements between, for example, two elements "connected" or "joined" to each other or "interlocked" with each other. In the claims and the specification, the term "any", if any, is to be understood as a term synonymous with a universal quantifier $\forall$ unless otherwise specified. For example, the expression "for any X" has the same meaning as "for all X" or "for each X".

Unless otherwise defined, all terms (including technical and scientific terms) used in the present specification have the same meanings as commonly understood by those skilled in the art to which the present invention belongs. It will be further understood that terms, such as those defined in commonly used dictionaries, should be interpreted as having meanings that are consistent with their meanings in the context of the relevant art and the present disclosure and should not be interpreted in an idealized or overly formal sense unless expressly so defined herein.

In describing the present invention, it will be understood that a number of techniques and steps are disclosed. Each of these has individual benefit and each can also be used in combination with one or more, or in some cases all, of the other disclosed techniques. Accordingly, for the sake of clarity, the present specification will refrain from explaining every possible combination of the individual techniques or steps. Nevertheless, the specification and claims should be read with the understanding that such combinations are entirely within the scope of the present invention and the claims.

The corresponding structures, materials, acts, and equivalents of all means or steps plus function elements in the claims below, if any, are intended to include any structure, material, or act for performing the function in combination with other elements.

Although the embodiment of the present invention has been described above, the present invention is not limited to the embodiment. Various modifications and variations may be made without departing from the gist of the present invention. The chosen and described embodiment is for illustrating the principles of the present invention and its practical application. The present invention is used in various embodiments and with various modifications or variations, and the various modifications or variations are tailored to suit an expected purpose. All such modifications and variations are intended to be included in the scope of the present invention as determined by the appended claims and are intended to be provided with comparable protection when interpreted in accordance with the breadth to which they are fairly, legally, and equitably entitled.

[DESCRIPTION OF REFERENCE NUMERALS]

1 tank
2 interface sensor
3 sensor block
5 pair of electrodes
5a electrode
5b electrode
6 electrode pair
7 conducting line
7x branch line
7y branch line
9 substrate
10 reference line
11 to 17 determination means
20 water level output means
31 electrode pair
31a, 31b electrode
40 to 43, 41' to 43' sensor
41a, 42a, 43a region
41b, 42b, 43b division region
50 to 53 wire
60a, 60b wire
61a, 61b, 61c wire
62a, 62b, 62c wire
63a, 63b, 63c wire
64 through hole
70, 70' sensor unit
80 input circuit
90, 90' discrimination means
91 to 94, 96 discrimination circuit
95 switch
100 water level determination means
110, 110' adjustment unit
111 capacitor
112 resistor

**Claims**

1.  A liquid level gauge comprising:

    an input circuit;
    a sensor unit;

a discrimination means; and

a liquid level determination means, wherein

the sensor unit includes n columns (n≥3) of sensors in which electrode pairs are arranged in a liquid level detection direction,

when a predetermined range in the liquid level detection direction is referred to as a region and each range obtained by dividing the region in the liquid level detection direction is referred to as a division region, each of the electrode pairs is positioned at a boundary of the region or at a boundary of the division region in the liquid level detection direction,

a sensor in a first column has $a_1$ ($a_1 \geq 2$) division regions when a measurement range of the liquid level gauge is considered to be a region,

a sensor in a second column has $a_1$ regions whose ranges and numbers correspond to ranges and numbers of the division regions of the sensor in the first column, where each of the regions has $a_2$ ($a_2 \geq 2$) division regions,

a sensor in an n-th column has regions whose number is obtained by multiplying numbers from $a_1$ to $a_{n-1}$ and whose ranges and numbers correspond to ranges and numbers of division regions of a sensor in an n-1-th column, where each of the regions has $a_n$ ($a_n \geq 2$) division regions,

one ends of electrode pairs of all sensors are connected to the input circuit,

the other end of each electrode pair of the sensor in the first column is connected to the discrimination means,

as for electrode pairs of the sensors in second and subsequent columns, the other ends of the electrode pairs located at boundaries of regions are connected in parallel with each other and are connected to the discrimination means and the other ends of the electrode pairs located at same boundaries of division regions in respective regions are connected in parallel with each other and are connected to the discrimination means,

the discrimination means discriminates a larger and smaller relationship of a plurality of detection values obtained from each sensor for each sensor, and

the liquid level determination means determines a liquid level based on discrimination of the discrimination means.

2. The liquid level gauge according to Claim 1, wherein
the electrode pairs detect capacitance between electrodes.

3. The liquid level gauge according to Claim 2, wherein
an adjustment unit is provided for each sensor so that the plurality of detection values are always different from each other.

4. The liquid level gauge according to Claim 1, wherein
the electrode pairs detect a resistance value between electrodes.

5. The liquid level gauge according to Claim 4, wherein
an adjustment unit is provided for each sensor so that the plurality of detection values are always different from each other.

6. The liquid level gauge according to any one of Claims 1 to 5, wherein

the numbers from the $a_1$ to $a_n$ are all 2, and

the discrimination means outputs a discrimination result for each sensor as a binary number to the liquid level determination means.

7. The liquid level gauge according to Claim 6, wherein
any one of the electrode pairs also serves as the adjustment unit in each sensor.

8. The liquid level gauge according to Claim 7, wherein
the electrode pair which also serves as the adjustment unit is an electrode pair located at a lowest position in the liquid level detection direction in each sensor.

9. The liquid level gauge according to any one of Claims 1 to 5, wherein
the discrimination means includes a discrimination circuit for each sensor.

10. The liquid level gauge according to any one of Claims 1 to 5, wherein
the discrimination means includes a switch, the switch being used for switching connection with each sensor, and a

**EP 4 481 338 A1**

single discrimination circuit.

11. A sensor for locating a position of an interface between a first substance and a second substance, the sensor comprising:

K sensor blocks, where K is a predetermined integer satisfying 2≤K, wherein
a k-th sensor block among the K sensor blocks includes M(k) pairs of electrodes and n(k)+1 conducting lines, where k∈ {x∈N:1≤x≤K}, N is a set of all positive integers, n(k) is a predetermined integer satisfying 2≤n(k), M(1)≥8, and for any k∈ {x∈N:1≤x≤K},

[FORMULA 9]

$$M(k) = \prod_{j=k}^{K} n(j)$$

,
an $m_k$-th pair of electrodes among the M(k) pairs of electrodes included in the k-th sensor block is placed in an r(k,$m_k$)-th plane among M(1) planes that do not coincide with each other and are parallel to each other, where $m_K$∈ {x∈N:1≤x≤M(k)}, the M(1) planes are arranged in order according to an order relation of elements of a set {x∈ N:1≤x≤M(1)}, n(0)=1, and for any k∈ {x∈N:1≤x≤K} and for any $m_k$∈ {x∈N:1≤x≤M(k)},

[FORMULA 10]

$$r(k, m_k) = m_k \times \prod_{j=1}^{k} n(j-1)$$

, and
the $m_k$-th pair of electrodes among the M(k) pairs of electrodes included in the k-th sensor block has one electrode, the one electrode being connected to an s($m_k$)-th conducting line among the n(k)+1 conducting lines, and the other electrode, the other electrode being connected to an n(k)+1-th conducting line among the n(k)+1 conducting lines, where for any k∈ {x∈N:1≤x≤K} and for any $m_K$∈ {x∈N:1≤x≤M(k)},

[FORMULA 11]

$$s(m_k) = \begin{cases} m_k \bmod n(k) & (m_k \bmod n(k) \neq 0) \\ n(k) & (m_k \bmod n(k) = 0) \end{cases}$$

12. A liquid level gauge comprising:

the sensor according to Claim 11, wherein
a first substance is a liquid, and
a second substance is a gas.

13. The liquid level gauge according to Claim 12, wherein
a normal direction of the M(1) planes is a vertical direction.

19

FIG. 1

EP 4 481 338 A1

FIG. 2

21

FIG. 3

# FIG. 4

FIG. 5

FIG. 6

# FIG. 7

# FIG. 8

## FIG. 9

# FIG. 10

<div align="center">

**INTERNATIONAL SEARCH REPORT**

</div>

| | International application No. |
|---|---|
| | **PCT/JP2023/009130** |

| A. | CLASSIFICATION OF SUBJECT MATTER |
|---|---|

*G01F 23/263*(2022.01)i; *G01F 23/24*(2006.01)i
FI:  G01F23/263; G01F23/24 N

According to International Patent Classification (IPC) or to both national classification and IPC

| B. | FIELDS SEARCHED |
|---|---|

Minimum documentation searched (classification system followed by classification symbols)

G01F23/263; G01F23/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | US 3552209 A (JOHNSTON, James Stewart) 05 January 1971 (1971-01-05)<br>entire text, all drawings | 1-13 |
| A | JP 57-064115 A (NIPPON GENSHIRYOKU KENKYUSHO) 19 April 1982 (1982-04-19)<br>entire text, all drawings | 1-13 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 March 2023** | **11 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| INTERNATIONAL SEARCH REPORT<br>Information on patent family members | | International application No.<br>**PCT/JP2023/009130** |
| --- | --- | --- |

| Patent document<br>cited in search report | Publication date<br>(day/month/year) | Patent family member(s) | Publication date<br>(day/month/year) |
| --- | --- | --- | --- |
| US 3552209 A | 05 January 1971 | (Family: none) | |
| JP 57-064115 A | 19 April 1982 | US 4423629 A<br>entire text, all drawings | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11311562 A